# EUROPÄISCHE PATENTSCHRIFT

(11) **EP 3 837 076 B1**
(45) Veröffentlichungstag und Bekanntmachung des Hinweises auf die Patenterteilung: **20.12.2023**
(21) Anmeldenummer: 19755364.7
(22) Anmeldetag: 15.08.2019
(51) Int. Cl.: B23C 5/10

(54) **FASWERKZEUG**
CHAMFERING TOOL
OUTIL DE CHANFREINAGE

(30) Priorität: 16.08.2018 DE 102018119927
(43) Veröffentlichungstag der Anmeldung: 23.06.2021
(73) Patentinhaber: Hartmetall-Werkzeugfabrik Paul Horn GmbH, 72072 Tübingen (DE)
(72) Erfinder: SCHMIDA, Peter Paul, 6232 Münster (AT); SCHWAIGER, Manfred Josef, 5550 Radstadt (AT)
(74) Vertreter: Witte, Weller & Partner Patentanwälte mbB
(86) Internationale Anmeldenummer: PCT/EP2019/071898
(87) Internationale Veröffentlichungsnummer: WO 2020/035551

(56) Entgegenhaltungen:
- DE-A1-102008 023 266
- DE-B3-102017 206 144
- GB-A- 896 644
- JP-A- H06 170 629
- US-A- 4 527 643
- US-A- 4 988 241
- US-A- 5 685 671
- US-B1- 6 984 093

## Beschreibung

Die vorliegende Erfindung betrifft ein Faswerkzeug zum Herstellen einer Fase an einem Werkstück.

Als Fase, die mit dem erfindungsgemäßen Faswerkzeug hergestellt wird, wird vorliegend insbesondere eine abgeschrägte Fläche an einer Werkstückkante bezeichnet. Oftmals handelt es sich bei einer mit dem erfindungsgemäßen Faswerkzeug hergestellten Fase um eine rotationssymmetrische Fase, die dann die Form einer Kegelsegmentfläche hat.

Der Vorgang zur Herstellung einer Fase wird typischerweise als "Anfasen" bezeichnet. Typischerweise werden Fasen an Werkstücken zur Entfernung von Graten, einer Verringerung der Verletzungsgefahr und/oder einer Vereinfachung der weiteren Montage angebracht. Bei Innen- und Außengewinden wird die Bohrung typischerweise mit einer 45°-Fase oder 60°-Fase versehen, durch die das Herausdrücken der ersten Gewindegänge vermieden wird und die Schneidwerkzeuge zum Schneiden der Innen- und Außengewinde sich leichter an dem Werkstück ansetzen lassen. Des Weiteren werden Werkstücke angefast, in die ein zweites Werkstück eingeführt wird. Die Fase dient dabei als Einführhilfe.

Das erfindungsgemäße Faswerkzeug eignet sich insbesondere zur Bearbeitung von Werkstücken aus fertig gesintertem Hartmetall oder Keramik. Der Einsatz des erfindungsgemäßen Faswerkzeugs ist jedoch nicht auf die Bearbeitung von Werkstücken aus solchen Werkstoffen beschränkt, gleichwohl ist dies der bevorzugte Einsatzzweck.

Fertig gesintertes Hartmetall hat eine sehr hohe Härte. Neben dem Einsatz als Schneidwerkstoff wird gesintertes Hartmetall häufig auch in der Umformtechnik als Stempel, Hammer oder als Verschleißteil eingesetzt. Das Anfasen solcher Bauteile aus fertig gesintertem Hartmetall erfolgt traditionell überwiegend durch Schleifen, teilweise auch durch Erodieren. Ebenso sind Vollhartmetall-Faswerkzeuge bekannt, deren Schneiden mit einer Diamantschicht überzogen sind. Die Standzeiten solcher Vollhartmetall-Faswerkzeuge mit Diamant-beschichteten Schneiden sind jedoch sehr kurz, so dass sich die Verwendung von derartigen Faswerkzeugen als kostenintensiv herausgestellt hat. Zudem müssen die Schneiden sehr exakt geschliffen werden, was deren Herstellung komplex und damit ebenfalls kostenintensiv macht. Aufgrund der Bearbeitung der Schneiden mittels Schleifen müssen die Schneiden darüber hinaus relativ groß ausgestaltet sein, zumindest muss die Aufnahme der Schneiden am Werkzeughalter relativ groß ausgestaltet sein, um die Schneiden zugänglich für das Schleifwerkzeug zu machen. Dementsprechend lassen sich an kleineren Werkzeughaltern nur relativ wenige Schneiden bzw. Schneidplatten anbringen.

Aus folgenden Druckschriften sind diverse beispielhafte Bearbeitungswerkzeuge unterschiedlicher Art bekannt: US 4,988,241 A, US 4,527,643 A, GB 896 644 A,

DE 10 2017 206 144 B3, US 5,685,671 A, JP H06 170629 A, DE 10 2008 023 266 A1 und US 6,984,093 B1. Die JP H 06 170629 A offenbart ein Faswerkzeug zum Herstellen einer Fase an einem Werkstück, wobei das Faswerkzeug aufweist:
- einen Werkzeughalter aus Hartmetall, der sich entlang einer Mittelachse erstreckt und eine erste schlitzförmige Schneidplattenaufnahme aufweist,
- eine erste Schneidplatte aus Diamant, die in der ersten Schneidplattenaufnahme stoffschlüssig befestigt ist, wobei die erste Schneidplatte zwei einander gegenüberliegende Seitenflächen, und eine zwischen den beiden Seitenflächen angeordnete und quer dazu verlaufende Unterseite aufweist, und wobei die erste Schneidplatte quer zu der Axialrichtung aus der ersten Schneidplattenaufnahme hervorragt und eine erste Hauptschneidkante aufweist, die in einem ersten spitzen Winkel zu der Mittelachse des Werkzeughalters ausgerichtet ist.

Es ist daher eine Aufgabe der vorliegenden Erfindung, ein Faswerkzeug bereitzustellen, das die oben genannten Probleme überwindet und sich insbesondere für die Bearbeitung von fertig gesintertem Hartmetall oder Keramiken eignet.

Diese Aufgabe wird durch ein Faswerkzeug gemäß Anspruch 1 gelöst, welches folgende Bauteile umfasst:
- einen Werkzeughalter aus Hartmetall, der sich entlang einer Mittelachse erstreckt und eine Vielzahl von schlitzförmigen Schneidplattenaufnahmen gleicher Form und Größe aufweist, die über einen Umfang des Werkzeughalters verteilt angeordnet sind, wobei die Schneidplattenaufnahmen jeweils zwei einander gegenüberliegende Seitenanlageflächen und eine zwischen den beiden Seitenanlageflächen angeordnete und quer dazu verlaufende Grundanlagefläche, welche einen Grund der jeweiligen Schneidplattenaufnahme bildet, aufweist;
- eine Vielzahl von Schneidplatten gleicher Form und Größe aus CVD-Dickschicht-Diamant, die jeweils in einer der Vielzahl von Schneidplattenaufnahmen jeweils stoffschlüssig befestigt sind, wobei die Schneidplatten jeweils zwei einander gegenüberliegende Seitenflächen, die an den beiden Seitenanlageflächen der jeweiligen Schneidplattenaufnahme anliegen oder mit diesen stoffschlüssig verbunden sind, und eine zwischen den beiden Seitenflächen angeordnete und quer dazu verlaufende Unterseite, die an der Grundanlagefläche der jeweiligen Schneidplattenaufnahme anliegt oder mit dieser stoffschlüssig verbunden ist, aufweist, und wobei die Schneidplatten jeweils sowohl in Axialrichtung, also parallel zu der Mittelachse des Werkzeughalters, als auch quer zu der Axialrichtung aus der jeweiligen Schneidplattenaufnahme hervorragen und jeweils eine erste Hauptschneidkante aufweisen, die in einem ersten spitzen Winkel zu der Mittelachse des Werkzeughalters ausgerichtet ist.

Das erfindungsgemäße Faswerkzeug zeichnet sich zum einen durch die Ausbildung des Werkzeughalters aus Hartmetall und durch die Ausbildung der ersten Schneidplatte aus CVD-Dickschicht-Diamant, zum anderen durch die Art der Anbringung der Schneidplatten an dem Werkzeughalter aus. Die Ausbildung des Werkzeughalters aus Hartmetall bildet die Grundlage für eine extrem stabile Grundstruktur des Faswerkzeugs. Die Ausbildung der Schneidplatten aus CVD-Dickschicht-Diamant ermöglicht die Herstellung von extrem präzisen Schneiden bzw. Schneidkanten, die exzellente Reibungseigenschaften und eine hohe Härte aufweisen. Durch die stoffschlüssige Befestigung der Schneidplatten in schlitzförmigen bzw. nutförmigen Schneidplattenaufnahmen entsteht eine extrem stabile Verbindung zwischen den Schneidplatten und dem Werkzeughalter, die eine Übertragung sehr hoher Drehmomente ermöglicht.

Durch die schlitz- bzw. nutförmige Ausbildung der Schneidplattenaufnahmen lässt sich zudem eine extrem platzsparende Anbringung der Schneidplatten an dem Werkzeughalter realisieren. Das erfindungsgemäße Faswerkzeug kann somit grundsätzlich mit einer Vielzahl derartiger Schneidplatten ausgestaltet werden.

Durch die oben genannten Merkmale lässt sich also ein extrem stabiles und hochpräzises Faswerkzeug realisieren, das im Vergleich zu den aus dem Stand der Technik bekannten Faswerkzeugen hohe Standzeiten ermöglicht und damit trotz der etwas höheren Kosten für die Schneidplatten aus CVD-Dickschicht-Diamant vergleichsweise kostengünstig herstellbar ist. Aufgrund der immensen Stabilität der Schneidplatten, des Werkzeughalters sowie deren Verbindung ist es mit dem erfindungsgemäßen Faswerkzeug möglich, hochharte Werkstoffe effizient und stressarm zu bearbeiten.

Die Bearbeitung des Werkstücks, also das Anfasen, erfolgt vorwiegend mittels der jeweiligen Hauptschneidkante der Schneidplatten. Diese Hauptschneidkante ist unter einem spitzen Winkel relativ zu der Mittelachse des Werkzeughalters ausgerichtet, dessen Größe vorzugsweise im Bereich von 30° bis 60° ist. Zur Herstellung einer Fase mit einem Fasenwinkel von 45° werden vorzugsweise Schneidplatten verwendet, deren Hauptschneidkante einen Winkel von 45° mit der Mittelachse einschließt. Zur Herstellung einer Fase mit einem Fasenwinkel von 60° werden vorzugsweise Schneidplatten verwendet, deren Hauptschneidkante mit der Mittelachse einen Winkel von 30° einschließt. Zur Herstellung einer Fase mit einem Fasenwinkel von 30° werden vorzugsweise Schneidplatten verwendet, deren Hauptschneidkante mit der Mittelachse einen Winkel von 60° einschließt. Selbstverständlich sind auch dazwischenliegende Winkel entsprechend möglich.

Gemäß einer Ausgestaltung der vorliegenden Erfindung sind die zwei einander gegenüberliegenden Seitenflächen der Schneidplatten mit den beiden Seitenanlageflächen der jeweiligen Schneidplattenaufnahme verlötet. Eine erste der beiden Seitenflächen ist also mit einer ersten der beiden Seitenanlageflächen verlötet und eine zweite der beiden Seitenflächen ist mit einer zweiten der beiden Seitenanlageflächen verlötet. Ebenso ist die Unterseite der ersten Schneidplatte mit der Grundanlagefläche der jeweiligen Schneidplattenaufnahme verlötet.

Die Schneidplatten sind mit dem Werkzeughalter gemäß dieser Ausgestaltung also jeweils auf drei ihrer Seiten verlötet. Hierdurch entsteht eine extrem stabile und nachhaltige Verbindung zwischen den Schneidplatten und den Schneidplattenaufnahmen, die die Übertragung hoher Drehmomente ermöglicht. Ein Verlöten der Schneidplatten in den Schneidplattenaufnahmen hat zudem den Vorteil, dass die Schnittstellen zwischen Schneidplatten und Schneidplattenaufnahmen während der Bearbeitung eines Werkstücks relativ gleichmäßig belastet wird. Eine punktuelle Belastung, wie sie bei einer Befestigung der Schneidplatten mittels einer Schraube auftreten würde, könnte dagegen zu einem Bruch der Schneidplatten führen, da der CVD-Dickschicht-Diamant, aus dem die Schneidplatten hergestellt sind, zwar eine hohe Härte aufweist, gleichzeitig aber relativ spröde ist. Ein derartig drohender Bruch der Schneidplatten kann durch ein dreiseitiges Verlöten der Schneidplatten wirksam vermieden werden.

Alternativ dazu ließe sich die Schneidplatten auch mit den Schneidplattenaufnahmen verschweißen. Ein Verlöten der Schneidplatten mit dem Werkzeughalter gestaltet sich jedoch einfacher und damit kostengünstiger.

Die beiden Seitenanlageflächen Schneidplattenaufnahmen sind gemäß einer Ausgestaltung jeweils vorzugsweise parallel zueinander ausgerichtet.

Dies ermöglicht zum einen ein relativ einfaches Einführen der Schneidplatten in die Schneidplattenaufnahmen und damit eine einfache Befestigung der Schneidplatten in Schneidplattenaufnahmen. Zum anderen wird dadurch die Kraftübertragung zwischen dem Werkzeughalter und den Schneidplatten optimiert.

Gemäß einer weiteren Ausgestaltung ist ein Abstand zwischen den beiden Seitenanlageflächen der Schneidplattenaufnahmen jeweils größer als ein Abstand zwischen den beiden Seitenflächen der Schneidplatten.

Die Schneidplattenaufnahmen sind mit anderen Worten also breiter ausgestaltet als die Schneidplatten. Dies vereinfacht die Montage der Schneidplatten an dem Werkzeughalter und ermöglicht es zudem im Falle eines Verlötens der Schneidplatten mit dem Werkzeughalter, das Lot (Lötmaterial) bei der Herstellung des Faswerkzeugs in den jeweiligen Zwischenraum zwischen den Schneidplatten und den Schneidplattenaufnahmen zu bringen. Die Schneidplatten werden also in die Schneidplattenaufnahmen vorzugsweise nicht eingepresst, sondern lediglich darin eingesetzt und anschließend verlötet. Dies mindert die internen Spannungen innerhalb des Werkzeughalters und der Schneidplatten.

Gemäß einer weiteren Ausgestaltung der vorliegenden Erfindung sind die beiden Seitenanlageflächen der Schneidplattenaufnahmen jeweils parallel zu einer Radialrichtung, die orthogonal zu der Mittelachse des Werkzeughalters verläuft, oder unter einem Winkel < 5° zu der Radialrichtung ausgerichtet.

Besonders bevorzugt ist eine Ausrichtung der beiden Seitenanlageflächen quer (also nicht parallel) unter einem Winkel < 5°, da hierdurch ein Spanwinkel erzeugt wird.

Gemäß einer weiteren Ausgestaltung sind die beiden Seitenanlageflächen der Schneidplattenaufnahmen parallel zu der Mittelachse des Werkzeughalters oder unter einem Winkel < 5° zu der Mittelachse des Werkzeughalters ausgerichtet.

Auch hier ist es bevorzugt, dass die beiden Seitenanlageflächen unter einem Winkel < 5° zu der Mittelachse des Werkzeughalters ausgerichtet sind, da hierdurch ein Einstellwinkel erzeugt wird, durch den die Belastung der ersten Hauptschneidkante verringert wird.

Gemäß einer weiteren Ausgestaltung stehen die Schneidplatten jeweils über ein stirnseitiges Ende des Werkzeughalters ab und der Werkzeughalter weist im Bereich des stirnseitigen Endes eine Kegelsegmentfläche auf, die durch die schlitzförmigen Schneidplattenaufnahmen unterbrochen ist. Vorzugsweise ist ein halber Öffnungswinkel dieser Kegelsegmentfläche gleich groß wie der erste spitze Winkel, der zwischen der ersten Hauptschneidkante und der Mittelachse des Werkzeughalters gemessen wird.

Die erste Hauptschneidkante verläuft damit also vorzugsweise parallel zu der genannten Kegelsegmentfläche. Dies verhindert zum einen Kollisionen zwischen dem zu bearbeitenden Werkstück und dem Werkzeughalter. Zum anderen wird dadurch ein relativ großer Spanraum erzeugt, der für die Spanabfuhr verwendet werden kann.

Gemäß einer weiteren Ausgestaltung weisen die Schneidplatten jeweils eine erste Nebenschneidkante auf, die parallel zu der Mittelachse des Werkzeughalters oder unter einem Winkel < 5° zu der Mittelachse des Werkzeughalters ausgerichtet ist.

Bevorzugt sind die Nebenschneidkanten jeweils parallel zu der Mittelachse des Werkzeughalters ausgerichtet. Die jeweilige Nebenschneidkante kann dabei entweder der seitlichen Abstützung dienen oder aber zur Bildung einer Doppelfase (hergestellt durch die Hauptschneidkante und die erste Nebenschneidkante) verwendet werden. Die Hauptschneidkante und die erste Nebenschneidkante sind vorzugsweise jeweils unter einem stumpfen Winkel (> 90°) zueinander ausgerichtet.

Gemäß einer weiteren Ausgestaltung weist die Schneidkante eine zweite Nebenschneidkante auf, die unter einem Winkel von 85°-90° zu der Mittelachse des Werkzeughalters ausgerichtet ist.

Diese zweite Nebenschneidkante verläuft vorzugsweise in Radialrichtung (orthogonal zu der Mittelachse) des Werkzeughalters oder geringfügig geneigt dazu. Sie bildet vorzugsweise das stirnseitige Ende der ersten Schneidplatte. Da die erste Schneidplatte in Axialrichtung über den Werkzeughalter absteht, bildet die zweite Nebenschneidkante vorzugsweise auch das stirnseitige Ende des gesamten Faswerkzeugs. Die zweite Nebenschneidkante schließt mit der Hauptschneidkante vorzugsweise einen stumpfen Winkel (> 90°) ein.

Die erste Nebenschneidkante hat von der Mittelachse des Werkzeughalters vorzugsweise einen größeren Abstand als die Hauptschneidkante der jeweiligen Schneidplatte. Die Hauptschneidkante hat von der Mittelachse des Werkzeughalters hingegen vorzugsweise einen größeren Abstand als die zweite Nebenschneidkante der jeweiligen Schneidplatte. Die erste Nebenschneidkante bildet also den Teil der Schneidplatten, der von der Mittelachse den größten radialen Abstand hat.

Gemäß einer weiteren Ausgestaltung ist ein erstes Ende der Hauptschneidkante mit der ersten Nebenschneidkante der jeweiligen Schneidplatte über einen ersten Radius verbunden. Ein zweites, dem ersten Ende gegenüberliegendes Ende der Hauptschneidkante ist mit der zweiten Nebenschneidkante der jeweiligen Schneidplatte über einen zweiten Radius verbunden.

Bei den beiden Radien handelt es sich vorzugsweise um Radien weniger Zehntel. Sie bilden abgerundete Ecken der Schneidplatten, wodurch Kollisionen oder gar ein Ausbrechen der Ecken der Schneidplatten verhindert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in den Zeichnungen dargestellt und wird in der nachfolgenden Beschreibung näher erläutert. Es zeigen:
- Fig. 1: eine perspektivische Ansicht eines Faswerkzeugs gemäß einem Ausführungsbeispiel der vorliegenden Erfindung;
- Fig. 2: ein Detail eines Bearbeitungskopfes des Faswerkzeugs aus Fig. 1 in einer perspektivischen Ansicht;
- Fig. 3: den Bearbeitungskopf aus Fig. 2 in einer Seitenansicht;
- Fig. 4: den Bearbeitungskopf aus Fig. 2 in einer Draufsicht von vorne;
- Fig. 5: den Bearbeitungskopf aus Fig. 2 in einer Draufsicht von vorne ohne darin eingesetzte Schneidplatten; und
- Fig. 6: den Bearbeitungskopf aus Fig. 2 in einer perspektivischen Ansicht ohne darin eingesetzte Schneidplatten.

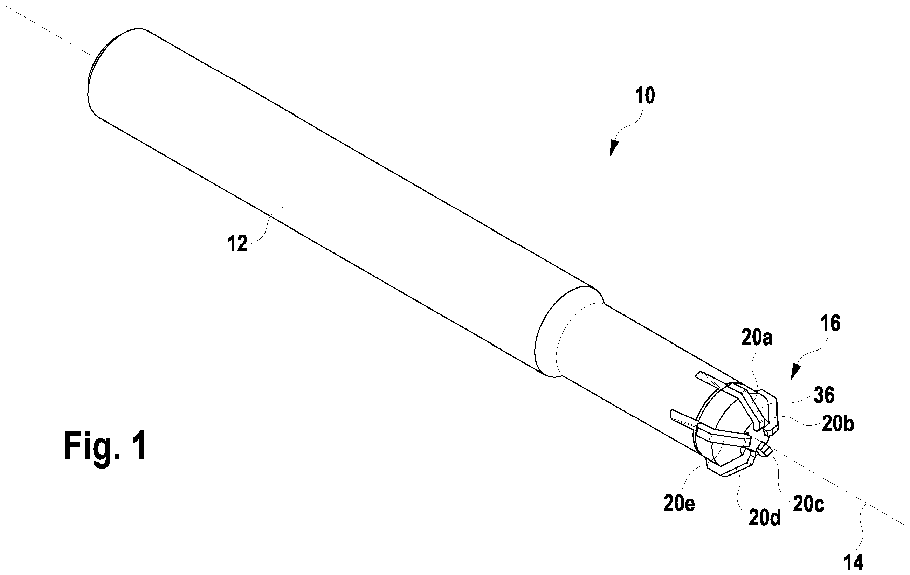

Fig. 1 zeigt eine perspektivische Ansicht eines Ausführungsbeispiels des erfindungsgemäßen Faswerkzeugs. Das Faswerkzeug ist darin in seiner Gesamtheit mit der Bezugsziffer 10 gekennzeichnet.

Das Faswerkzeug 10 weist einen Werkzeughalter 12 auf, der sich entlang einer Mittelachse 14 erstreckt. Das Faswerkzeug 10 ist vorzugsweise, jedoch nicht notwendigerweise, drehsymmetrisch bezüglich der Mittelachse 14. Im Bereich seines vorderen Endes weist das Faswerkzeug 10 einen Bearbeitungskopf 16 auf, mit dem ein zu bearbeitendes Werkstück spanend bearbeitet wird.

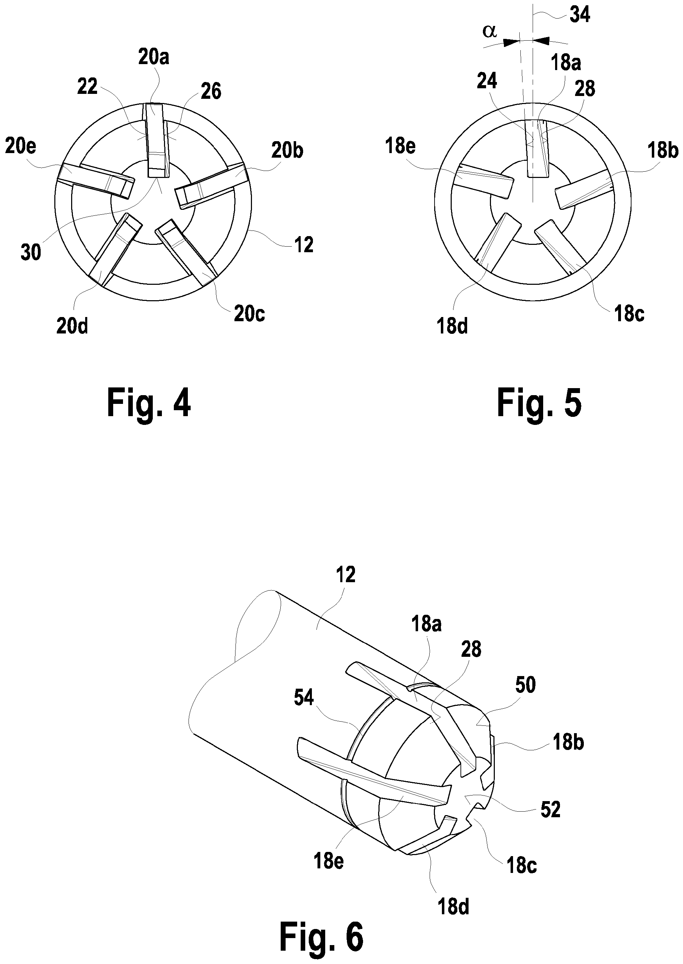

In dem vorliegend gezeigten Ausführungsbeispiel weist der Werkzeughalter 12 im Bereich des Bearbeitungskopfes 16 fünf Schneidplattenaufnahmen 18a-18e auf, welche zu deren besseren Differenzierung als erste, zweite, dritte, vierte bzw. fünfte Schneidplattenaufnahme 18a-18e bezeichnet werden (siehe Fig. 5). Die Schneidplattenaufnahmen 18a-18e dienen der Aufnahme von jeweils einer Schneidplatte 20a-20e, welche vorliegend als erste, zweite, dritte, vierte bzw. fünfte Schneidplatte 20a-20e bezeichnet werden.

Die Schneidplattenaufnahmen 18a-18e und die Schneidplatten 20a-20e sind vorzugsweise gleichmäßig über den Umfang des Werkzeughalters 12 bzw. über den Umfang des Faswerkzeugs 10 verteilt. Der Werkzeughalter 12 ist vorzugsweise aus Hartmetall. Die Schneidplatten 20a-20e sind vorzugsweise aus CVD-Dickschicht-Diamant.

Die Verwendung mehrerer Schneidplatten erhöht die Stabilität wie auch die Standzeit des Faswerkzeugs 10. Da für die Funktion des Faswerkzeugs 10 jedoch die Verwendung lediglich einer Schneidplatte ausreichend ist, wird im Folgenden der Einfachheit halber die Art der Anbringung der Schneidplatten 20a-20e innerhalb der Schneidplattenaufnahmen 18a-18e nur anhand der ersten Schneidplatte 20a bzw. der ersten Schneidplattenaufnahme 18a im Detail erläutert. Bei der Verwendung mehrerer Schneidplatten bzw. Schneidplattenaufnahmen sind die übrigen Schneidplatten 20b-20e bzw. die übrigen Schneidplattenaufnahmen 18b-18e vorzugsweise in gleicher bzw. äquivalenter Form ausgestaltet.

Die erste Schneidplattenaufnahme 18a ist als eine schlitz- bzw. nutförmige Aufnahmetasche ausgestaltet, die im Bereich des Bearbeitungskopfes 16 in den Werkzeughalter 12 eingebracht ist und sowohl in axialer Richtung, also parallel zu der Mittelachse 14, als auch umfangsseitig von außen zugänglich ist. Die erste Schneidplatte 20a ist in die erste Schneidplattenaufnahme 18a derart eingesetzt, dass sie sowohl in Axialrichtung über das vordere Ende des Werkzeughalters 12 absteht als auch umfangsseitig über den Umfang des Werkzeughalters 12 von diesem absteht.

Die erste Schneidplatte 20a ist nicht nur in die erste Schneidplattenaufnahme 18a eingesetzt, sondern auch stoffschlüssig mit dieser verbunden. Vorzugsweise ist die erste Schneidplatte 20a mit dem Werkzeughalter 12 in der ersten Schneidplattenaufnahme 18a verlötet. Besonders bevorzugt ist die Schneidplatte 20a auf drei ihrer Seiten mit der Schneidplattenaufnahme 18a verlötet. Eine erste Seitenfläche 22 der ersten Schneidplatte 20a ist mit einer ersten Seitenanlagefläche 24 der ersten Schneidplattenaufnahme 18a verlötet. Eine gegenüberliegende zweite Seitenfläche 26 der ersten Schneidplatte 20a ist mit einer zweiten Seitenanlagefläche 28 der ersten Schneidplattenaufnahme 18a verlötet. Eine Unterseite 30 der ersten Schneidplatte 20a ist mit einer Grundanlagefläche der ersten Schneidplattenaufnahme 18a verlötet.

Wenngleich bevorzugt ist, dass die erste Schneidplatte 20a an allen drei genannten Flächen 22, 26, 30 mit der ersten Schneidplattenaufnahme 18a verlötet ist, wäre es generell denkbar, die erste Schneidplatte 20a auch nur an einer oder zwei dieser Flächen 22, 26, 30 mit der ersten Schneidplattenaufnahme 18a zu verlöten. Ein Verlöten der ersten Schneidplatte 20a an allen drei genannten Flächen 22, 26, 30 erhöht jedoch die Stabilität der Verbindung zwischen der ersten Schneidplatte 20a und dem Werkzeughalter 12.

Die beiden einander gegenüberliegenden Seitenanlageflächen 24, 28 bilden die Flanken der nut- bzw. schlitzförmigen ersten Schneidplattenaufnahme 18a. Sie verlaufen vorzugsweise parallel zueinander. Die zwischen den beiden Seitenanlageflächen 24, 28 verlaufende Grundanlagefläche bildet den Grund bzw. Nutgrund der nut- bzw. schlitzförmigen ersten Schneidplattenaufnahme 18a. Diese Grundanlagefläche verläuft quer (also nicht parallel) zu den beiden Seitenanlageflächen 24, 28. Bevorzugt ist die Grundanlagefläche orthogonal zu den beiden Seitenanlageflächen 24, 28 ausgerichtet

Ähnliches gilt auch für die Seitenflächen 22, 26 und die Unterseite 30 der ersten Schneidplatte 20a. Die beiden Seitenflächen 22, 26 verlaufen vorzugsweise parallel zueinander und quer (also nicht parallel) zu der Unterseite 30. Bevorzugt ist die Unterseite 30 orthogonal zu den beiden Seitenflächen 22, 26 ausgerichtet.

Um das Einsetzen der ersten Schneidplatte 20a in die erste Schneidplattenaufnahme 18a zu erleichtern und um Lot an den genannten Stellen zwischen der Schneidplatte 20a und den seitlichen Flanken 24, 28 der ersten Schneidplattenaufnahme 18a einbringen zu können, ist die erste Schneidplattenaufnahme 18a vorzugsweise breiter ausgestaltet als die erste Schneidplatte 20a. Ein Abstand, den die beiden Seitenanlageflächen 24, 28 voneinander haben, ist also vorzugsweise größer als ein Abstand, den die beiden Seitenflächen 22, 26 voneinander haben.

Wenngleich die erste Schneidplatte 20a grundsätzlich exakt radial in den Werkzeughalter 12 eingesetzt werden kann, ist die erste Schneidplattenaufnahme 18a und damit auch die erste Schneidplatte 20a in dem vorliegend gezeigten Ausführungsbeispiel bezüglich der Radialrichtung des Werkzeughalters 12 etwas geneigt. Die erste Seitenanlagefläche 24 wie auch die zweite Seitenanlagefläche 28 schließen jeweils mit der Radialrichtung, welche in Fig. 5 gestrichelt eingezeichnet und mit dem Bezugszeichen 34 versehen ist, einen Winkel α ein, der vorzugsweise im Bereich von 0°-5° ist. Durch die entsprechende Neigung der ersten Schneidplatte 20a ergibt sich ein Spanwinkel an der Hauptschneidkante 36 der ersten Schneidplatte 20a.

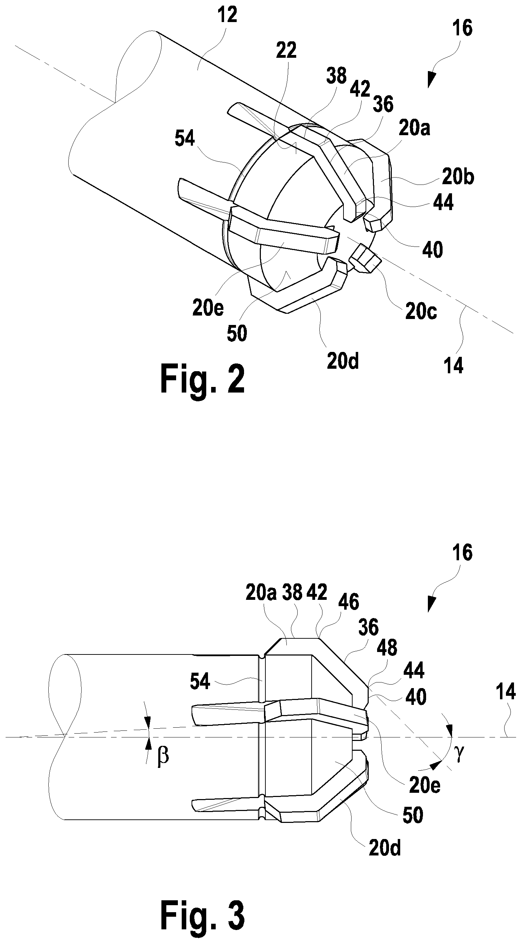

Die beiden Seitenanlageflächen 24, 28 der ersten Schneidplattenaufnahme 18a sind ferner vorzugsweise auch relativ zu der Mittelachse 14 des Werkzeughalters 12 leicht geneigt. Der entsprechende Neigungswinkel β ist in Fig. 3 an der fünften Schneidplattenaufnahme 18e eingezeichnet. Der Neigungswinkel β ergibt sich jedoch in gleicher Weise auch an der ersten Schneidplattenaufnahme 20a. Durch diesen Neigungswinkel β ergibt sich an der Hauptschneidkante 36 der ersten Schneidplatte 20a ein Einstellwinkel. Der Neigungswinkel β weist vorzugsweise eine Größe im Bereich von 0°-5° auf.

Die erste Hauptschneidkante 36 der ersten Schneidplatte 20a verläuft vorzugsweise unter einem spitzen Winkel relativ zu der Mittelachse 14 des Werkzeughalters 12. Dieser spitze Winkel ist in Fig. 3 als Winkel γ eingezeichnet. Das Anfasen eines zu bearbeitenden Werkstücks erfolgt mit Hilfe der Hauptschneidkante 36 der ersten Schneidplatte 20a. Der Anstellwinkel γ der Hauptschneidkante 36 wird demnach entsprechend dem am Werkstück zu erzeugenden Fasenwinkel gewählt. Je nach gewünschtem Fasenwinkel wird der Anstellwinkel γ (spitzer Winkel) daher meist im Bereich von 30°-60° gewählt.

Zusätzlich zu der ersten Hauptschneidkante 36 weist die erste Schneidplatte 20a in dem gezeigten Ausführungsbeispiel eine erste Nebenschneidkante 38 und eine zweite Nebenschneidkante 40 auf. Die erste Nebenschneidkante 38 verläuft vorzugsweise parallel zu der Mittelachse 14 oder ist gegenüber dieser geringfügig, beispielsweise um einen Winkel < 5°, geneigt. Die zweite Nebenschneidkante 40 verläuft orthogonal zu der Mittelachse 14 oder ist um einen Winkel < 5° zu der Radialrichtung 34 geneigt. Die beiden Nebenschneidkanten 38, 40 dienen im Wesentlichen der Abstützung des Bearbeitungskopfes 16 an dem zu bearbeitenden Werkstück. Grundsätzlich kann jedoch auch mit den Nebenschneidkanten 38, 40 eine spanende Bearbeitung erfolgen. Beispielsweise lässt sich mit Hilfe der ersten Nebenschneidkante 38 und der ersten Hauptschneidkante 36 an dem Werkstück eine Doppelfase herstellen.

Die erste Nebenschneidkante 38 ist über einen ersten Radius 42 mit einem ersten Ende 46 der ersten Hauptschneidkante 36 verbunden. Die zweite Nebenschneidkante 40 ist über einen zweiten Radius 44 mit dem zweiten Ende 48 der ersten Hauptschneidkante 36 verbunden. Die beiden Radien 42, 44 sind vorzugsweise relativ klein, im Bereich weniger Zehntel gewählt.

Der Werkzeughalter 12 ist im Bereich des Bearbeitungskopfes 16 der Form nach an die Schneidplatten 20a-20e angepasst. Der Werkzeughalter 12 weist dazu beispielsweise eine Kegelsegmentfläche 50 auf, die durch die schlitzförmigen Schneidplattenaufnahmen 18a-18e unterbrochen ist. Diese Kegelsegmentfläche 50 verläuft vorzugsweise parallel zu den Hauptschneidkanten 36 der Schneidplatten 20a-20e. Ein halber Öffnungswinkel der Kegelsegmentfläche 50 ist mit anderen Worten also gleich groß wie der Neigungswinkel γ der Hauptschneidkanten 36 der Schneidplatten 20a-20e-

Am vorderen Ende weist der Werkzeughalter 12 eine stirnseitige Abschlussfläche 52 auf, die vorzugsweise orthogonal zu der Mittelachse 14 ausgerichtet ist (siehe Fig. 6). Die Schneidplattenaufnahmen 18a-18e münden an der Vorderseite des Werkzeughalters 12 sowohl in die Kegelsegmentfläche 50 als auch in die stirnseitige Abschlussfläche 52. An dem gegenüberliegenden hinteren Ende laufen die Schneidplattenaufnahmen 18a-18e jeweils nach hinten hin flacher werdend aus.

In Fig. 3 und 6 ist ferner eine in Umfangsrichtung verlaufende Nut 54 ersichtlich. Diese Nut 54 dient der Anbringung einer Positioniervorrichtung, beispielsweise eines Positionierrings, mit Hilfe derer die Schneidplatten 20a-20e während der Befestigung an dem Werkzeughalter 12 in Axialrichtung zueinander ausgerichtet werden können. Die Positioniervorrichtung (hier nicht gezeigt) kann anschließend wieder entnommen werden, sobald die Schneidplatten 20a-20e in den Schneidplattenaufnahmen 18a-18e befestigt sind.

## Patentansprüche

1. Faswerkzeug (10) zum Herstellen einer Fase an einem Werkstück, wobei das Faswerkzeug (10) aufweist:
- einen Werkzeughalter (12) aus Hartmetall, der sich entlang einer Mittelachse (14) erstreckt und eine Vielzahl von schlitzförmigen Schneidplattenaufnahmen (18a-18e) gleicher Form und Größe aufweist, die über einen Umfang des Werkzeughalters (12) verteilt angeordnet sind, wobei die Schneidplattenaufnahmen (18a-18e) jeweils zwei einander gegenüberliegende Seitenanlageflächen (24, 28) und eine zwischen den beiden Seitenanlageflächen (24, 28) angeordnete und quer dazu verlaufende Grundanlagefläche, (02), welche einen Grund der jeweiligen Schneidplattenaufnahme (18a-18e) bildet, aufweist;
- eine Vielzahl von Schneidplatten (20a-20e) gleicher Form und Größe aus CVD-Dickschicht-Diamant, die jeweils in einer der Vielzahl von Schneidplattenaufnahmen (18a-18e) stoffschlüssig befestigt sind, wobei die Schneidplatten (20a-20e) jeweils zwei einander gegenüberliegende Seitenflächen (22, 26), die an den beiden Seitenanlageflächen (24, 28) der jeweiligen Schneidplattenaufnahme (18a-18e) anliegen oder mit diesen stoffschlüssig verbunden sind, und eine zwischen den beiden Seitenflächen (22, 26) angeordnete und quer dazu verlaufende Unterseite (30), die an der Grundanlagefläche der jeweiligen Schneidplattenaufnahme (18a-18e) anliegt oder mit dieser stoffschlüssig verbunden ist, aufweist, und wobei die Schneidplatten (20a-20e) jeweils sowohl in Axialrichtung, also parallel zu der Mittelachse (14) des Werkzeughalters (12), als auch quer zu der Axialrichtung aus der jeweiligen Schneidplattenaufnahme (18a-18e) hervorragen und jeweils eine Hauptschneidkante (36) aufweisen, die in einem ersten spitzen Winkel (γ) zu der Mittelachse (14) des Werkzeughalters (12) ausgerichtet ist.

2. Faswerkzeug nach Anspruch 1, wobei die zwei einander gegenüberliegenden Seitenflächen (22, 26) der Schneidplatten (20a-20e) mit den beiden Seitenanlageflächen (24, 28) der jeweiligen Schneidplattenaufnahme (18a) verlötet sind, und wobei die Unterseite (30) der Schneidplatten (20a-20e) mit der Grundanlagefläche (30) der jeweiligen Schneidplattenaufnahme (18a) verlötet ist.

3. Faswerkzeug nach Anspruch 1 oder 2, wobei die beiden Seitenanlageflächen (24, 28) der Schneidplatten (20a-20e) jeweils parallel zueinander ausgerichtet sind.

4. Faswerkzeug nach einem der Ansprüche 1-3, wobei ein Abstand zwischen den beiden Seitenanlageflächen (24, 28) der Schneidplattenaufnahmen (18a-18e) jeweils größer als ein Abstand zwischen den beiden Seitenflächen (22, 26) der Schneidplatten (20a-20e) ist.

5. Faswerkzeug nach einem der Ansprüche 1-4, wobei die beiden Seitenanlageflächen (24, 26) der Schneidplattenaufnahmen (18a-18e) jeweils parallel zu einer Radialrichtung (34), die orthogonal zu der Mittelachse (14) des Werkzeughalters (12) verläuft, oder unter einem Winkel (α) kleiner 5° zu der Radialrichtung (34) ausgerichtet sind.

6. Faswerkzeug nach einem der Ansprüche 1-5, wobei die beiden Seitenanlageflächen (24, 28) der Schneidplattenaufnahmen (18a-18e) parallel zu der Mittelachse (14) des Werkzeughalters (12) oder unter einem Winkel (β) kleiner 5° zu der Mittelachse (14) des Werkzeughalters (12) ausgerichtet sind.

7. Faswerkzeug nach einem der Ansprüche 1-6, wobei die Schneidplatten (20a-20e) über ein stirnseitiges Ende des Werkzeughalters (12) abstehen und der Werkzeughalter (12) im Bereich des stirnseitigen Endes eine Kegelsegmentfläche (50) aufweist, die durch die schlitzförmigen Schneidplattenaufnahmen (18a) unterbrochen ist.

8. Faswerkzeug nach Anspruch 7, wobei ein halber Öffnungswinkel der Kegelsegmentfläche (50) gleich groß wie der erste spitze Winkel (γ) ist.

9. Faswerkzeug nach einem der Ansprüche 1-8, wobei der erste spitze Winkel (γ) eine Größe von 30°-60° hat.

10. Faswerkzeug nach einem der Ansprüche 1-9, wobei die Schneidplatten (20a-20e) jeweils eine erste Nebenschneidkante (38) aufweisen, die parallel zu der Mittelachse (14) des Werkzeughalters (12) oder unter einem Winkel kleiner 5° zu der Mittelachse (14) des Werkzeughalters (12) ausgerichtet ist.

11. Faswerkzeug nach einem der Ansprüche 1-10, wobei die Schneidplatten (20a-20e) jeweils eine zweite Nebenschneidkante (40) aufweisen, die unter einem Winkel von 85°-90° zu der Mittelachse (14) des Werkzeughalters (12) ausgerichtet ist.

12. Faswerkzeug nach den Ansprüchen 10 und 11, wobei die erste Nebenschneidkante (38) von der Mittelachse (14) des Werkezughalters (12) jeweils einen größeren Abstand hat als die erste Hauptschneidkante (36) der jeweiligen Schneidplatte (20a-20e), und wobei die Hauptschneidkante (36) von der Mittelachse (14) des Werkzeughalters (12) jeweils einen größeren Abstand hat als die zweite Nebenschneidkante (40) der jeweiligen Schneidplatte (20a-20e).

13. Faswerkzeug nach Anspruch 12, wobei ein erstes Ende (46) der ersten Hauptschneidkante (36) jeweils mit der ersten Nebenschneidkante (38) der jeweiligen Schneidplatte (20a-20e) über einen ersten Radius (42) verbunden ist, und wobei ein zweites Ende (48) der Hauptschneidkante (36) jeweils mit der zweiten Nebenschneidkante (40) der jeweiligen Schneidplatte (20a-20e) über einen zweiten Radius (44) verbunden ist.

## Claims

1. A chamfer tool (10) for producing a chamfer on a workpiece, the chamfer tool (10) comprising:
- a tool holder (12) made of cemented carbide, which extends along a central axis (14) and comprises a plurality of slot-shaped cutting insert receptacles (18a-18e) of same shape and size that are arranged distributed around a circumference of the tool holder (12), wherein each of the cutting insert receptacles (18a-18e) comprises two opposing lateral abutment surfaces (24, 28) and a base abutment surface arranged between the two lateral abutment surfaces (24, 28), extending transversely thereto and forming a base of the respective cutting insert receptacle (18a-18e);
- a plurality of cutting inserts (20a-20e) of same shape and size, being made of CVD thick-film diamond, wherein each of the cutting inserts is fixed in one of the plurality of cutting insert receptacles (18a-18e) in a firmly bonded manner, wherein the cutting inserts (20a-20e) each comprise two opposing lateral surfaces (22, 26), which abut against or are connected in a firmly bonded manner to the two lateral abutment surfaces (24, 28) of the respective cutting insert receptacle (18a-18e), and a lower surface (30) arranged between the two lateral surfaces (22, 26) and extending transversely thereto, wherein the lower surface (30) abuts against or is connected in a firmly bonded manner to the base abutment surface of the respective cutting insert receptacle (18a-18e), and wherein the cutting inserts (20a-20e) each project out of the respective cutting insert receptacle (18a-18e) both in an axial direction, which is parallel to the central axis (14) of the tool holder (12), and transversely to the axial direction and each comprises a main cutting edge (36) which is oriented at a first acute angle (γ) to the central axis (14) of the tool holder (12).

2. The chamfer tool according to claim 1, wherein the two opposing lateral surfaces (22, 26) of the cutting inserts (20a-20e) are soldered to the two lateral abutment surfaces (24, 28) of the respective cutting insert receptacle (18a), and wherein the lower surface (30) of the cutting inserts (20a-20e) is soldered to the base abutment surface (30) of the respective cutting insert receptacle (18a).

3. The chamfer tool according to claim 1 or 2, wherein the two lateral abutment surfaces (24, 28) of the cutting inserts (20a-20e) are each oriented parallel to each other.

4. The chamfer tool according to any one of claims 1-3, wherein a distance between the two lateral abutment surfaces (24, 28) of the cutting insert receptacles (18a-18e) is in each case greater than a distance between the two lateral surfaces (22, 26) of first cutting inserts (20a-20e).

5. The chamfer tool according to any one of claims 1-4, wherein the two lateral abutment surfaces (24, 26) of the cutting insert receptacles (18a-18e) are each oriented parallel to a radial direction (34) or at an angle (α) smaller than 5° to the radial direction (34), wherein the radial direction is orthogonal to the central axis (14) of the tool holder (12).

6. The chamfer tool according to any one of claims 1-5, wherein the two lateral abutment surfaces (24, 28) of the cutting insert receptacles (18a-18e) are oriented parallel to the central axis (14) of the tool holder (12) or at an angle (β) smaller than 5° to the central axis (14) of the tool holder (12).

7. The chamfer tool according to any one of claims 1-6, wherein the cutting inserts (20a-20e) project beyond a front end of the tool holder (12), and wherein the tool holder (12) comprises, in an area of the front end, a conical segment surface (50) which is interrupted by the slot-shaped cutting insert receptacles (18a).

8. The chamfer tool according to claim 7, wherein a half opening angle of the conical segment surface (50) is equal to the first acute angle (γ).

9. The chamfer tool according to any one of claims 1-8, wherein the first acute angle (γ) has a size of 30°-60°.

10. The chamfer tool according to any one of claims 1-9, wherein the cutting inserts (20a-20e) each comprise a first secondary cutting edge (38) that is oriented parallel to the central axis (14) of the tool holder (12) or at an angle less than 5° to the central axis (14) of the tool holder (12).

11. The chamfer tool according to any one of claims 1-10, wherein the cutting inserts (20a-20e) each comprise a second secondary cutting edge (40) that is oriented at an angle of 85°-90° to the central axis (14) of the tool holder (12).

12. The chamfer tool according to claims 10 and 11, wherein the first secondary cutting edge (38) is in each case spaced from the central axis (14) of the tool holder (12) a greater distance than the first main cutting edge (36) of the respective cutting insert (20a-20e), and wherein the main cutting edge (36) is in each case spaced from the central axis (14) of the tool holder (12) a greater distance than the second secondary cutting edge (40) of the respective cutting insert (20a-20e).

13. The chamfer tool according to claim 12, wherein a first end (46) of the first main cutting edge (36) is in each case connected to the first secondary cutting edge (38) of the respective cutting insert (20a-20e) via a first radius (42), and wherein a second end (48) of first main cutting edge (36) is in each case connected to the second secondary cutting edge (40) of the respective cutting insert (20a-20e) via a second radius (44).

## Revendications

1. Outil de chanfreinage (10) destiné à réaliser un chanfrein sur une pièce, l'outil de chanfreinage (10) comportant :
- un porte-outil (12) en métal dur qui s'étend le long d'un axe central (14) et comporte une pluralité de logements de plaquette de coupe (18a-18e) en forme de fente, de même forme et de même taille, qui sont disposés de manière répartie sur une périphérie du porte-outil (12), les logements de plaquette de coupe (18a-18e) comportant chacun deux surfaces d'appui latérales (24, 28) opposées l'une à l'autre et une surface d'appui de base qui est disposée entre les deux surfaces d'appui latérales (24, 28), qui s'étend transversalement à celles-ci et qui forme une base du logement de plaquette de coupe respectif (18a-18e) ;
- une pluralité de plaquettes de coupe (20a-20e) de même forme et de même taille, en diamant à couche épaisse CVD, qui sont chacune fixées par une liaison de matière dans l'un de la pluralité de logements de plaquette de coupe (18a-18e), les plaquettes de coupe (20a-20e) comportant chacune deux surfaces latérales opposées (22, 26), qui sont en appui sur les deux surfaces d'appui latérales (24, 28) du logement de plaque de coupe respectif (18a-18e) ou qui sont reliées à celles-ci par une liaison de matière, et une face inférieure (30) qui est disposée entre les deux surfaces latérales (22, 26), qui s'étend transversalement à celles-ci et qui est en appui sur la surface d'appui de base du logement de plaquette de coupe respectif (18a-18e) ou est reliée à celle-ci par une liaison de matière, et les plaquettes de coupe (20a-20e) saillant chacune du logement de plaquette de coupe respectif (18a-18e) dans la direction axiale, c'est-à-dire parallèlement à l'axe central (14) du porte-outil (12), ainsi que transversalement à la direction axiale et comportant chacune un bord de coupe principal (36) qui est orienté suivant un premier angle aigu (γ) par rapport à l'axe central (14) du porte-outil (12).

2. Outil de chanfreinage selon la revendication 1, les deux surfaces latérales opposées (22, 26) des plaquettes de coupe (20a-20e) étant brasées aux deux surfaces d'appui latérales (24, 28) du logement de plaquette de coupe respectif (18a), et la face inférieure (30) des plaquettes de coupe (20a-20e) étant brasée à la surface d'appui de base (30) du logement de plaquette de coupe respectif (18a).

3. Outil de chanfreinage selon la revendication 1 ou 2, les deux surfaces d'appui latérales (24, 28) des plaquettes de coupe (20a-20e) étant chacune orientées parallèlement l'une à l'autre.

4. Outil de chanfreinage selon l'une des revendications 1 à 3, une distance entre les deux surfaces d'appui latérales (24, 28) des logements de plaquette de coupe (18a-18e) étant à chaque fois supérieure à une distance entre les deux surfaces latérales (22, 26) des plaquettes de coupe (20a- 20e).

5. Outil de chanfreinage selon l'une des revendications 1 à 4, les deux surfaces d'appui latérales (24, 26) des logements de plaquette de coupe (18a-18e) étant chacune orientées parallèlement à une direction radiale (34) qui s'étend orthogonalement à l'axe central (14) du porte-outil (12), ou suivant un angle (α) inférieur à 5° par rapport à la direction radiale (34).

6. Outil de chanfreinage selon l'une des revendications 1 à 5, les deux surfaces d'appui latérales (24, 28) des logements de plaquette de coupe (18a-18e) étant orientées parallèlement à l'axe central (14) du porte-outil (12) ou suivant un angle (β) inférieur à 5° par rapport à l'axe central (14) du porte-outil (12).

7. Outil de chanfreinage selon l'une des revendications 1 à 6, les plaquettes de coupe (20a-20e) dépassant d'une extrémité frontale du porte-outil (12) et le porte-outil (12) comportant dans la zone de l'extrémité frontale une surface de segment de cône (50) qui est interrompue par les logements de plaquette de coupe (18a) en forme de fente.

8. Outil de chanfreinage selon la revendication 7, un demi-angle d'ouverture de la surface de segment de cône (50) étant de même grandeur que le premier angle aigu (γ).

9. Outil de chanfreinage selon l'une des revendications 1 à 8, le premier angle aigu (γ) ayant une grandeur de 30° à 60°.

10. Outil de chanfreinage selon l'une des revendications 1 à 9, les plaquettes de coupe (20a-20e) comportant chacune un premier bord de coupe secondaire (38) qui est orienté parallèlement à l'axe central (14) du porte-outil (12) ou suivant un angle inférieur à 5° par rapport à l'axe central (14) du porte-outil (12).

11. Outil de chanfreinage selon l'une des revendications 1 à 10, les plaquettes de coupe (20a-20e) comportant chacune un deuxième bord de coupe secondaire (40) qui est orienté suivant un angle de 85° à 90° par rapport à l'axe central (14) du porte-outil (12).

12. Outil de chanfreinage selon les revendications 10 et 11, le premier bord de coupe secondaire (38) étant à une plus grande distance de l'axe central (14) du porte-outil (12) que le premier bord de coupe principal (36) de la plaque de coupe respective (20a-20e), et le bord de coupe principal (36) étant à une plus grande distance de l'axe central (14) du porte-outil (12) que le deuxième bord de coupe secondaire (40) de la plaque de coupe respective (20a-20e).

13. Outil de chanfreinage selon la revendication 12, une première extrémité (46) du premier bord de coupe principal (36) étant reliée au premier bord de coupe secondaire (38) de la plaquette de coupe respective (20a-20e) par un premier rayon (42), et une deuxième extrémité (48) du bord de coupe principal (36) étant reliée au deuxième bord de coupe secondaire (40) de la plaquette de coupe respective (20a-20e) par un deuxième rayon (44).
